# EUROPEAN PATENT APPLICATION

(11) **EP 3 528 318 A1**
(43) Date of publication of application: **21.08.2019**
(21) Application number: 17860030.0
(22) Date of filing: 22.09.2017
(51) Int. Cl.: H01M 4/04, F26B 3/04, F26B 5/04, F26B 9/06, H01M 4/139

(54) **ELECTRODE DRYING METHOD**

(30) Priority: 11.10.2016 JP 2016199979
(71) Applicant: Nissan Motor Co., Ltd., Yokohama-shi, Kanagawa 221-0023 (JP)
(72) Inventor: SUGIYAMA, Masahiko, Atsugi-shi Kanagawa 243-0123 (JP)
(74) Representative: Grünecker Patent- und Rechtsanwälte PartG mbB
(86) International application number: PCT/JP2017/034301
(87) International publication number: WO 2018/070217

(57) **Abstract**

A drying method for drying a roll electrode for a negative electrode, comprising a first heating step of raising temperature of an electrode to a first temperature, a maintenance step of keeping a state of the electrode for a predetermined period of time after the first heating step, and a second heating step of raising temperature of the electrode up to a second temperature higher than the first temperature after the predetermined period of time has elapsed, wherein the first temperature is set to evaporation temperature of the moisture contained in the electrode or higher, and the second temperature is set to decomposition temperature of an additive contained in the electrode or higher.

## Description

### [Technical Field]

The present invention relates to a drying method of an electrode.

The present application is to claim priority based on Japanese patent application JP 2016-199979 applied on October 11, 2016, and for specified countries where integration of a document by reference to the document is permitted, the contents disclosed by the above application will be integrated to the present application and treated as part of the description of the present application.

### [Background Art]

Conventionally, as a drying method of a roll electrode, a method of lowering the boiling point by reducing pressure inside a vacuum chamber while heating, drying the roll electrode, and arranging cooling time after completion of drying is known (Patent Document 1).

### [Prior Art Document]

### [Patent Document]

[Patent Document 1] JP 2011-169499 A

### [Summary of Invention]

### [Problems to be solved by Invention]

However, in the above drying method, because a heating step is performed only once before drying the electrode, there was a problem that moisture inside the electrode cannot be sufficiently eliminated.

An object of the present invention is to provide a drying method which can sufficiently eliminate moisture inside the electrode.

### [Means for solving problems]

In the present invention, in order to solve the above problem, temperature of the roll electrode for a negative electrode disposed inside a chamber is raised up to a first temperature, the state of the electrode is kept for a predetermined period of time, and after the predetermined period of time has elapsed, the temperature of the electrode is raised to a second temperature that is higher than the first temperature. More, the first temperature is equal to or higher than the evaporation temperature of moisture contained in the electrode and decomposition temperature of an additive contained in the electrode.

### [Effect of Invention]

According to the present invention, an effect of sufficiently eliminating moisture inside the electrode can be obtained.

### [Brief Description of Drawings]

Fig. 1 is a plan view of a thin-type battery.
Fig. 2 is a sectional view taken along line II-II in Fig. 1.
Fig. 3 is a conceptual diagram of a dryer.
Fig. 4 is a flowchart illustrating steps of the drying method according to the present embodiment.
Fig. 5 is a graph illustrating temperature characteristics of a roll electrode when performing the drying method according to the present embodiment.

### [Modes for Carrying out the Invention]

In the following, an embodiment of the present invention will be described with reference to the drawings.

The drying method of the electrode according to the present embodiment is a method for evaporating moisture inside an electrode which is a component of a battery. The electrode targeted for drying is used for a lithium ion battery or the like.

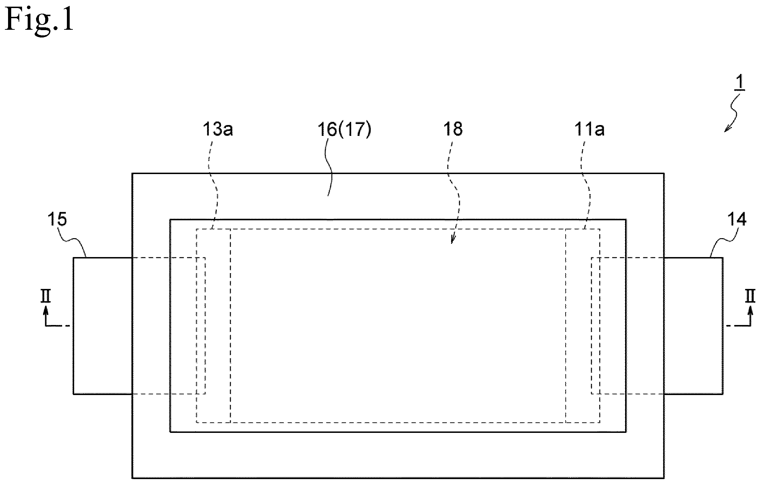

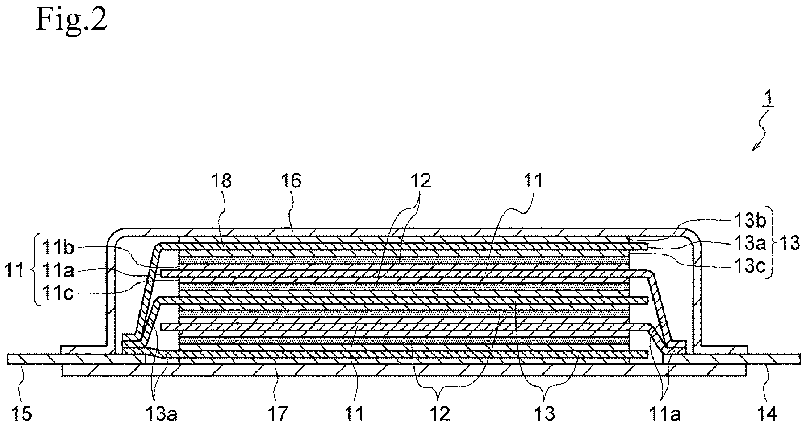

First, using Fig. 1 and Fig. 2, structure of a thin-type battery 1 will be explained. Fig. 1 is a plan view of a thin-type battery and Fig. 2 is a sectional view taken along line II-I in Fig. 1. The thin-type battery 1 is mounted, for example, on a vehicle such as an electric vehicle or hybrid vehicle. The thin-type battery 1 is a lithium ion battery. The thin-type battery 1 includes at least an electrode dried by the drying method according to the present embodiment. More, in the following explanation, as an example of a secondary battery, a layered-type (flat-type battery) will be used, however, as to the form and structure of the battery, the one with any form and structure conventionally known, such as a winding-type (cylindrical) battery can be used.

The thin-type battery 1 of the present example is a thin-type secondary battery of lithium, flat plate, and laminated type. As shown in Fig. 1 and Fig. 2, three sheets of positive-electrode plate 11, five sheets of separator 12, three sheets of negative-electrode plate 13, a positive electrode terminal 14, a negative electrode terminal 15, an upper exterior member 16, a lower exterior member 17, and an electrolyte not especially shown in figure are included.

Among these, the positive-electrode plate 11, separator 12, negative-electrode plate 13, and electrolyte constitute a power generation element 18, the positive-electrode plate 11 and negative-electrode plate 13 constitute an electrode plate, and the upper exterior member 16 and lower exterior member 17 constitute a pair of exterior members.

The positive-electrode plate 11 included in the power generation element 18 comprises a positive-electrode side current collector 11a that extends up to the positive electrode terminal 14 and positive electrode layers 11b and 11c formed to a part on both main surfaces of the positive-electrode side current collector 11a respectively. Additionally, the positive electrode layers 11b and 11c of the positive-electrode plate 11 are not formed entirely on both main surfaces of the positive-electrode side current collector 11a, but as shown in Fig. 2, when forming the power generation element 18 by laminating the positive-electrode plate 11, separator 12, and negative-electrode plate 13, the positive electrode layers 11b and 11c are formed only to the part that substantially overlaps with the separator 12 of the positive-electrode plate 11. More, in the present example, the positive-electrode plate 11 and positive-electrode side current collector 11a are formed by a single sheet of conductor. However, the positive-electrode plate 11 and positive-electrode side current collector 11a may be formed separately and then connected.

The positive-electrode side current collector 11a of the positive-electrode plate 11 includes, for example, a metal foil that is electrochemically stable such as an aluminum foil, aluminum alloy foil, copper foil, or nickel foil, etc. Also, the positive electrode layers 11b and 11b of the positive-electrode plate 11 are formed, for example, by mixing positive electrode active material such as lithium composite oxide like lithium nickelate (LiNiO₂), lithium manganate (LiMnO₂), or lithium cobalt oxide (LiCoO₂) and chalcogenide (S, Se, Te), etc., a conductive agent such as carbon black, an adhesive agent such as an aqueous dispersion or the like of polytetrafluoroethylene, and solvent, and by applying the mixture to a part of both main surfaces of the positive-electrode side current collector 11a, and then by drying and rolling. More, the positive active mentioned above is only an example, and LiMn₂O₄ or Li(Ni-Mn-Co)O₂ may be used, for example. Possibly, the positive electrode material may be lithium-transition metal composite oxide, lithium-transition metal phosphorus compound, lithium-transition metal sulfuric acid compound or the like where a part of the transition metal of the lithium composite oxides is replaced by another element.

The negative-electrode plate 13 forming the power generation element 18 comprises a negative-electrode side current collector 13a that extends up to the negative electrode terminal 15 and negative electrode layers 13b and 13c formed to a part on both main surfaces of the negative-electrode side current collector 13a respectively. Additionally, the negative electrode layers 13b and 13c of the negative-electrode plate 13 are not formed entirely on both main surfaces of the negative-electrode side current collector 13a, but as shown in Fig. 2, when forming the power generation element 18 by laminating the positive-electrode plate 11, separator 12, and negative-electrode plate 13, the negative electrode layers 13b and 13c are formed only to the part that substantially overlaps with the separator 12 of the negative-electrode plate 13. More, in the present example, the negative-electrode plate 13 and negative-electrode side current collector 13a are formed by a single sheet of conductor. However, the negative-electrode plate 13 and negative-electrode side current collector 13a may be formed separately and then connected.

The negative-electrode side current collector 13a of the negative-electrode plate 13 includes, for example, a metal foil that is electrochemically stable such as nickel foil, copper foil, stainless foil, or iron foil, etc. Also, the negative electrode layers 13b and 13c of the negative-electrode plate 13 are formed, for example, by mixing negative electrode active material that occludes and discharges lithium ions and binder to obtain a negative electrode slurry, and applying the slurry to a part on both main surfaces of the negative-electrode side current collector 13a, and by drying and rolling. The negative electrode active material is, for example, a substance such as amorphous carbon, hardly graphitizable carbon, easily graphitizable carbon, or graphite. The binder is an aqueous binder obtained by combining an additive such as carboxymethyl cellulose (CMC) and binding material such as styrene butadiene copolymer (SBR).

Particularly, when amorphous carbon and hardly graphitizable carbon are used as the negative electrode active material, since the flat characteristic of the potential during charge and discharge becomes poor and output voltage decreases along with the discharge amount, it is unsuitable for use as a power source of a communication device or office equipment, however, it is advantageous when used as a power source for an electric vehicle since there is no rapid output decrease.

The separator 12 of the power generation element 18 is to prevent short circuit between the positive-electrode plate 11 and negative-electrode plate 13 described above and may include a function of retaining electrolyte. The separator 12 is a microporous film including, for example, polyolefin such as polyethylene (PE) and polypropylene (PP), and includes a function to shut the current by blocking holes of the layer by the generated heat when overcurrent flows.

Further, as to the separator 12 according to the present example, not only a single layer film such as polyolefin can be used, but also the one having a three-layer structure where polypropylene film is sandwiched by polyethylene films, or the one obtained by laminating a polyolefin fine porous film and organic nonwoven fabric or the like can be also used.

To the above power generation element 18, the positive-electrode plate 11 and negative-electrode plate 13 are alternately laminated via the separator 12. Also, each of the three sheets of the positive-electrode plate 11 is connected to a positive electrode terminal 14 made of metal foil respectively, whereas, each of the three sheets of the negative-electrode plate 13 is similarly connected to the negative electrode terminal 15 made of metal foil via the negative-electrode side current collector 13a respectively.

Additionally, the numbers of the positive-electrode plate 11, separator 12, and negative-electrode plate 13 of the power generation element 18 are not limited to the numbers mentioned above, and a single sheet of positive-electrode plate 11, three sheets of separator 12, and a single sheet of negative-electrode plate 13 may be included to the power generation element 18. The numbers of positive-electrode plate 11, separator 12, and negative-electrode plate 13 included in the power generation element 18 can be selected accordingly.

For the positive electrode terminal 14 and negative electrode terminal 15, any metallic material that is electrochemically stable can be used, and for the positive electrode terminal 14, such as an aluminum foil, aluminum alloy foil, copper foil, or nickel foil, can be used. Also, as to the negative electrode terminal 15, such as a nickel foil, copper foil, stainless foil, or iron foil can be used.

The power generation element 18 mentioned above is housed in an upper exterior member 16 and lower exterior member 17 and sealed. Although not shown in figure, both the upper exterior member 16 and lower exterior member 17 have a three-layer structure, that is from the inner side to the outer side of the thin-type battery 1, an inner side layer including such as a resin film having great electrolyte resistance and thermal adhesiveness such as polyethylene, modified polyethylene, polypropylene, modified polypropylene, or ionomer etc., an intermediate layer including a metal foil such as aluminum or the like, and an outer side layer including a resin film having great electric insulation such as polyamide resin or polyester resin, etc.

Accordingly, both the upper exterior member 16 and lower exterior member 17 are formed by material having flexibility like resin-metallic-thin-film lamination material, etc., for example, laminating one surface of the metal foil such as an aluminum foil (inner-side surface of the thin-type battery 1) with resin such as polyethylene, modified polyethylene, polypropylene, modified polypropylene, or ionomer, and laminating the other surface (the outer-side surface of the thin-type battery 1) with polyamide resin or polyester resin.

After covering a part of the power generation element 18, positive electrode terminal 14, and negative electrode terminal 15 mentioned above with these exterior members 16 and 17, injecting liquid electrolyte prepared by dissolving lithium salt such as lithium perchlorate, lithium borofluoride, or lithium hexafluorophosphate to an organic liquid solvent to the inner space formed by the exterior members 16 and 17, and evacuating the space formed by the exterior members 16 and 17 by sucking, peripheral line of the exterior members 16 and 17 is thermally fused by heat pressing and sealed.

As for the organic liquid solvent, an ester-based solvent such as propylene carbonate (PC), ethylene carbonate (EC), dimethyl carbonate (DMC), or methyethyl carbonate can be mentioned. However, the organic liquid solvent of the present example is not limited to the above, and other organic liquid solvent prepared by mixing ether-based solvent or the like such as γ-butyrolactone (γ-BL) or diethyl ether (DEE), etc., to an ester-based solvent can be also used.

As above, the thin-type battery 1 is made by injecting electrolyte to a laminated body, which is obtained by laminating the electrode plate and separator, and sealing with a pair of exterior members 16 and 17. In the production step of the thin-type battery 1, by cutting the roll electrode 100 after sending it out for a required length, an electrode is produced. The roll electrode 100 is made by wrapping the electrode in a roll with a winding core as its center.

In order to raise battery performance of the thin-type battery 1, it is preferable to dry the roll electrode 100 and evaporate moisture inside the electrode. When the roll electrode 100 contains much moisture, much moisture is also included in the electrode after cutting the roll electrode 100, and much moisture will be contained in the electrode that becomes a power generation element even after its installation as the thin-type battery 1. When installed as the thin-type battery 1, the moisture inside the electrode reacts with the electrolyte and thus the electrolyte decreases (shortage of the electrolyte), and the battery performance lowers. Also, the moisture inside the electrode becomes gas and the shape of the thin-type battery 1 changes and stability of the battery lowers. For this reason, it is preferable to have less moisture in the electrode before installation to the thin-type battery 1.

The drying method according to the present embodiment is a method to reduce the amount of moisture inside an electrode before installation as a thin-type battery 1. In the following, a dryer for executing the drying method according to the present embodiment and a drying method will be described.

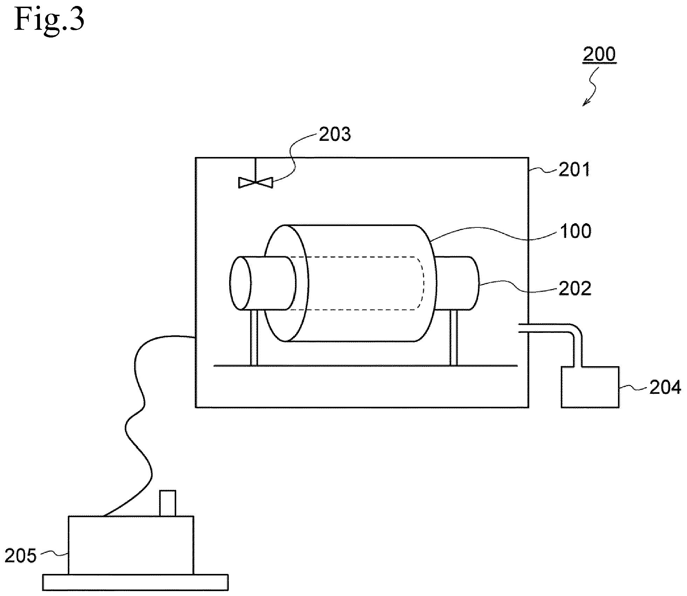

Fig. 3 is a schematic diagram of a dryer. As shown in Fig. 3, the dryer 200 includes a chamber 201, support 202, fan 203, nitrogen generator 204, and vacuum pump 205.

The chamber 201 is a container where the roll electrode 100 is arranged to its inner space. The chamber 201 is a container with high airtightness so as not to allow gas inside after decompression. The chamber 201 is a chamber of a water-cooling type, and a channel is formed to its case part of the chamber 201. Inside the channel, water from a pump for water-cooling (not shown in figure) circulates.

The support 202 supports the roll electrode 100 from inside the chamber 201. The support 202 includes an axis heater and leg part. The axis heater adds heat from inside the roll electrode 100. The fan 203 is arranged inside the chamber 201 and is a device for air cooling for cooling the roll electrode 100. The nitrogen generator 204 is a device that generates nitrogen and supplies nitrogen to the chamber 201. The vacuum pump 205 is a device that reduces pressure inside the chamber 201 and makes inside the chamber 201 to a vacuum state.

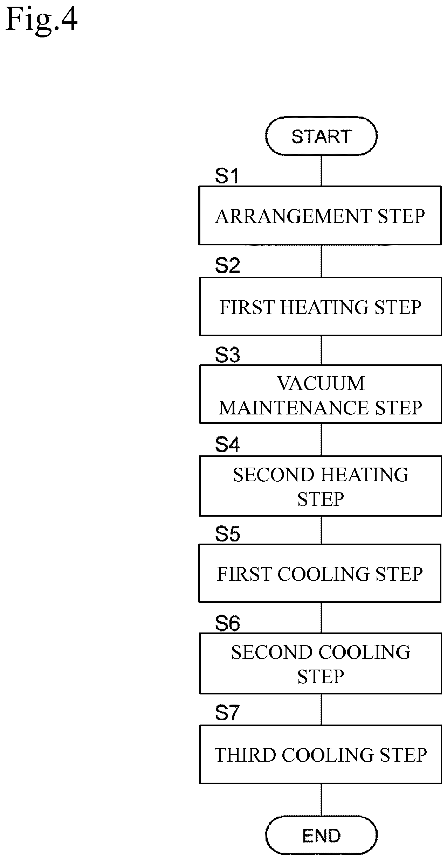

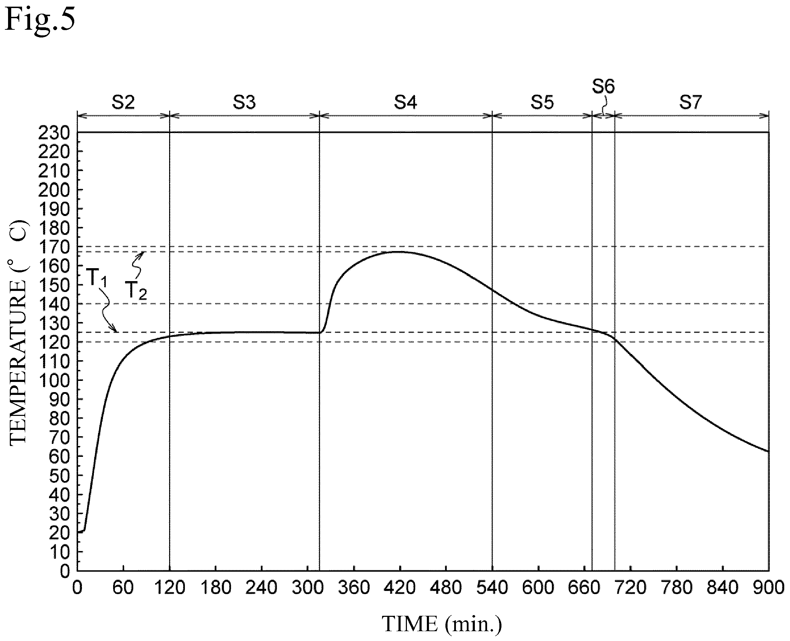

Next, using Fig. 4 and Fig. 5, each step of the drying method according to the present embodiment will be explained. The drying method of the present embodiment is used for drying the negative electrode. In the drying method of electrode for the negative electrode described in the following is preferably applied to dry the negative electrode that uses a aqueous binder. Fig. 4 is a flowchart of the drying method according to the present embodiment. Fig. 5 is a graph illustrating temperature characteristics of the roll electrode dried by the drying method according to the present embodiment. More, "S2" to "S7" shown in Fig. 5 correspond to steps "S2" to "S7" of the flowchart in Fig. 4. In Fig. 5, characteristics of each graph divided into "S2" to "S7" represent transition of the temperature of the roll electrode 100 in each step between step S2 to step S7 in Fig. 4.

More, as a preparation step of the electrode drying method according to the present embodiment, by winding the electrode of the plate shape in a roll, the roll electrode 100 is formed. When doing this, in the electrode of the plate shape before wound to a roll, the length of the electrode in the longitudinal direction is within a range of 200 m and more to 900 m or below. Further, as to the conditions for winding the roll electrode, the number of winding times of the electrode of the plate shape is within the range of 800 and more to 3600 or below, and the diameter of the roll electrode is within a range of 350 mm or more to 400 mm or below. Various conditions set in the following explanation are set in order to sufficiently evaporate the moisture inside the roll electrode 100 formed as above.

In step S1 (arrangement step), the roll electrode 100 is supported by a support 202 and the roll electrode 100 is arranged inside the chamber 201. As the vacuum pump 205 operates in a state in which the roll electrode is arranged inside the chamber 201, inside the chamber 201 becomes a vacuum state.

In step S2, a first heating step is executed. In the first heating step, by heating the roll electrode 100, temperature of the roll electrode 100 is raised to the evaporation temperature of the moisture contained in the roll electrode 100 or higher. Specifically, the dryer 200 encloses nitrogen inside the chamber 201 as inert gas and drives a fan 203. Also, the dryer 200 switches the axis heater of the support 202 ON. By the enclosed nitrogen and operation of the fan 203, heat is transmitted to the roll electrode 100. The length of the heating time in the first heating step is about two hours. Target temperature (T₁) for the first heating step is set to the evaporation temperature of the moisture contained in the roll electrode 100 or greater. Also, the target temperature (T₁) is set to the foil burning temperature of the negative-electrode plate 13 or decomposition temperature of an additive or lower. In other words, the target temperature (T₁) is set within a range of the evaporation temperature of the moisture or higher to foil burning temperature or lower, or within a range of the evaporation temperature of the moisture to decomposition temperature of the additive or lower.

In the present embodiment, the evaporation temperature of the moisture contained in the roll electrode 100 is set to 120°C and decomposition temperature of the additive and foil burning temperature of the negative-electrode plate 13 are both set to 140°C. The target temperature (T₁) is within a range 120°C and 140°C and is set to about 125°C.

The dryer 200 heats the roll electrode 100 until the temperature of the roll electrode 100 reaches the target temperature (T₁). In this way, temperature of the roll electrode 100 after the heating time has elapsed becomes higher than 120°C. More, in the first heating step, from a state in which inside the chamber 201 is set to a vacuum, nitrogen is added. Accordingly, nitrogen functions as a carrier for transmitting heat to the roll electrode 100 and thus the heating time for the roll electrode 100 can be shortened. Also, compared to a case where inside the chamber 201 is heated in a vacuum state, the load to the chamber 201 can be reduced.

In step S3, a vacuum maintenance step is executed. The vacuum maintenance step is a step for maintaining the state inside the chamber for predetermined vacuum maintenance time. Specifically, the dryer 200 makes the inside the chamber 201 to a vacuum state and maintains a state in which the temperature of the roll electrode 100 is at least higher than 120°C. Also, the temperature of the roll electrode 100 in the vacuum maintenance step is set below the foil burning temperature. The foil burning temperature is the temperature a metal foil forming the negative plate 13 becomes a burnt state. For example, when the negative-electrode plate 13 is formed by a copper foil, the foil burning temperature is 140°C. In the vacuum maintenance step, the time for maintaining the vacuum state (vacuum maintenance time) is approximately three hours. In the present embodiment, the vacuum maintenance time is about 200 minutes.

In the vacuum maintenance step, while the inside the chamber 201 is in the vacuum state, temperature of the roll electrode 100 is maintained higher than the evaporation temperature (120°C) of moisture and lower than the foil burning temperature (140°C). By adopting the vacuum state, the moisture adhered to the electrode surface can be easily desorbed. Also, by maintaining the roll electrode to a high temperature state, the moisture adhered to the electrode surface can be easily desorbed and moisture within a crystal can be desorbed from the crystal. The desorbed moisture dries. In this way, the moisture within the electrode can be evaporated.

Unlike the present embodiment, when the moisture is desorbed in a state in which the temperature of the roll electrode 100 is 140°C or higher, there is a risk of oxidization (copper oxidation) of the negative-electrode plate 13 by the desorbed moisture and oxygen. When an inspection step such as an image inspection is executed after drying, the result of the judgment becomes poor when the negative-electrode plate 13 is oxidized. As a result, yield percentage may decrease. More, when welding the negative-electrode plate 13, when the negative-electrode plate 13 is oxidized, welding strength lowers by the oxide film and there is a risk of poor welding. In the present embodiment, because the vacuum maintenance step is executed while the temperature of the roll electrode 100 is set below the foil burning temperature, oxidization of the negative-electrode plate 13 by the moisture desorbed from the roll electrode 100 can be prevented.

In step S4, a second heating step is executed. In the second heating step, by further heating up the roll electrode 100, temperature of the roll electrode 100 is raised so as to become the decomposition temperature of the additive or higher. Specifically, the dryer 200 encloses nitrogen inside the chamber 201, drives the fan 203, and turns on the axis heater of the support 202. The length of heating time in the second heating step is approximately three hours. In the present embodiment, the length of heating time is about 220 minutes. The target temperature (T₂) in the second heating step is higher than the target temperature (T₁) and higher than the decomposition temperature of the additive. Further, the target temperature (T₂) is set below the decomposition temperature of the binding material. In other words, the target temperature (T₂) is set within a range between the decomposition temperature of the additive or higher and the decomposition temperature of below the binding material.

In the present embodiment, since CMC is used as polysaccharide, the decomposition temperature of the additive is set to 140°C, which is the decomposition temperature of CMC. More, since SBR is used for the binding material, the decomposition temperature of the binding material is set to 170°C, which is the decomposition temperature of SBR. The target temperature (T₂) is within a range of 140 (T₂) to 170 (T₂) and is set to about 168°C.

The dryer 200 heats up the roll electrode until temperature of the roll electrode 100 reaches the target temperature (T₂). More, the dryer 200, during the heating time, controls the axis heater, etc., so as not to make the temperature of the roll electrode 100 higher than the target temperature (T₂). When the temperature of the roll electrode 100 becomes higher than the decomposition temperature of CMC, moisture is generated by decomposition of CMC. Since the second heating step is performed in a state in which nitrogen is enclosed within the chamber 201, the moisture generated by decomposition of CMC remains inside the negative electrode active material.

In the completed thin-type battery 1, CMC reacts with electrolyte and performance of the battery may become low. In the present embodiment, by performing the second heating step, CMC is decomposed and thus the lowering of the battery performance can be prevented. Also, when CNC is decomposed, the part where CMC exited before decomposition inside the electrode becomes a hole. Then, when the negative electrode with many holes is incorporated into the thin-type battery 1, lithium ion enters the holes. As a result, efficiency of lithium insertion increases and battery performance can be raised.

Further, the second heating step is executed under a state in which nitrogen is enclosed inside the chamber. For this reason, while uniformly applying heat inside the chamber 201, the length of the heating time can be shortened and load to the chamber 201 can be reduced.

In step S5, a first cooling step is executed. In the first cooling step, by heat dissipation of the roll electrode 100, temperature of the roll electrode 100 is made below the foil burning temperature. Specifically, the dryer 200, while turning off the axis heater, drives the fan to raise cooling efficiency. The first cooling step is executed while the nitrogen enclosed in the third heating step exists inside the chamber 201. The length of cooling time is approximately 130 minutes.

When executing evacuation as a post-step of the heating step, there is a risk of burning the negative-electrode plate 13 in evacuation when the temperature of the roll electrode 100 is the foil burning temperature or higher. For this reason, in the present embodiment, by performing the first cooling step, the temperature of the roll electrode 100 is set below the foil burning temperature before evacuation. Also, when executing the evacuation, if the temperature of the roll electrode 100 is high (140°C or higher), copper oxidation of the negative-electrode plate 13 tends to occur. Accordingly, in the present embodiment, temperature of the roll electrode 100 is set below 140°C before evacuation to prevent copper oxidation during the evacuation. More, because the fan is driven while there is nitrogen inside the chamber 201, the length of cooling time can be shortened.

In step S6, a second cooling step is executed. In the second cooling step, while making inside the chamber 201 to a vacuum, temperature of the roll electrode 100 is lowered. Specifically, the dryer 200 drives the vacuum pump 205 and performs evacuation. The length of evacuation time is about 30 minutes. The dryer 200 makes the temperature of the roll electrode 100 within a range of 120°C to 140°C, and performs the evacuation.

By heating of the second heating step, CMC is decomposed and moisture is generated. When there is nitrogen inside the chamber 201, moisture remains inside the electrode, however, by performing evacuation, moisture is desorbed and electrode is dried. In this way, moisture generated by CMC decomposition can be evaporated. Additionally, because the second cooling step is performed within a range of 120°C to 140°C, adhesion of desorbed moisture back to the electrode can be prevented.

In step S7, a third cooling step is executed. In the third cooling step, while enclosing inert gas inside the chamber 201, temperature of the roll electrode 100 is lowered. Specifically, the dryer 200 encloses nitrogen inside the chamber 201 and drives the fan 203. Also, the dryer 200, by driving the pump for water cooling, circulates cool water to the chamber 201. By driving the fan, in a state in which nitrogen is enclosed inside the chamber 201, the length of cooling time can be shortened. Also, in the third cooling step, by driving a cooling mechanism of the water-cooling method, the cooling time can be further shortened.

As mentioned above, in the present embodiment, temperature of the electrode arranged inside the chamber 201 is raised up to the first temperature (target temperature T₁), the state of the electrode is kept for a predetermined period of time, and after the predetermined period of time has elapsed, temperature of the electrode is raised up to the second temperature (target temperature T₂). In other words, the drying method according to the present embodiment is a method of heating the electrode in two steps: in the first step of the heating step, temperature of the electrode is raised up to the evaporation temperature of moisture or higher, and in the second step of the heating step, the temperature of the electrode is raised up to the decomposition temperature of the additive or higher. In this way, moisture inside the electrode can be sufficiently evaporated.

More, in the present embodiment, the step of maintaining the state of the electrode performed between the first heating step and second heating step is performed in a state in which inside the chamber 201 is a vacuum. In this way, moisture from inside the electrode can be desorbed.

Also, in the present embodiment, the second heating step is performed in a state in which inert gas is enclosed inside the chamber 201. In this way, the length of the heating time can be shortened. Also, heat can be uniformly transmitted to the roll electrode 100.

More, in the present embodiment, the target temperature T₂ is set lower than the decomposition temperature of the binding material. In this way, in the second heating step, while preventing decomposition of the binding material, decomposition of the additive can be accelerated.

More, in the present embodiment, the first heating step is performed in a state in which inert gas is enclosed inside the chamber 201. In this way, the length of heating time can be shortened. Also, heat can be uniformly transmitted to the roll electrode 100.

Also, in the present embodiment, the target temperature T₁ is set lower than the foil burning temperature. In this way, in the first heating step, while preventing foil burning, evaporation of the moisture can be accelerated.

More, in the present embodiment, after performing the second heating step in a state in which inert gas is enclosed inside the chamber 201, temperature of the electrode is lowered below the foil burning temperature. In this way, foil burning can be prevented. Also, the length of cooling time can be shortened compared to a case where cooling is performed under a vacuum.

More, in the present embodiment, after the first cooling step, while evacuating inside the chamber 201, the electrode is cooled. In this way, moisture generated by CMC decomposition can be evaporated.

More, in the present embodiment, after the second cooling step, the electrode is cooled in a state in which inert gas is enclosed in the chamber 201. In this way, the length of the cooling time can be shortened.

Further, in the present embodiment, when the decomposition temperature of the additive and the foil burning temperature of the current collector differ, the one with a lower temperature becomes the upper limit temperature for the vacuum maintenance step. Also, when the foil burning temperature of the current collector is sufficiently high, the first cooling step may be omitted, or the length of the first cooling step may be shortened. Also, evacuation of the second cooling step may be performed within the temperature range (a range between 100°C and 140°C) that is suitable for eliminating substances generated by CMC decomposing reaction.

More, in the present embodiment, the additive contained in the negative electrode is not limited to CMC and other materials may be used, and the binding material contained in the negative electrode is not limited to SBR and other materials may be used. More, the binder of the negative electrode is not limited to the binder combining CMC and SBR, and other aqueous binder may be used.

Further, in the drying method according to the present embodiment, the heating step may be performed three times or more. However, in order to make the length of heating time short, the heating step is preferably performed twice. Also, the length of time for the vacuum maintenance step performed between the two heating stepes should be set according to the time required for drying moisture. Also, in order to reduce the length of time required from the first heating step to the second heating step, the first heating step, vacuum maintenance step, and the second heating step should be performed in a row.

### [Description of Reference Numerals]

- 1: Thin-type battery
- 11: Positive-electrode plate
- 12: Separator
- 13: Negative-electrode plate
- 14: Positive electrode terminal
- 15: Negative electrode terminal
- 16, 17: Exterior member
- 17: Lower exterior member
- 18: Power generation element
- 100: Roll electrode
- 200: Dryer
- 201: Chamber
- 202: Support
- 203: Fan
- 204: Nitrogen generator
- 205: Vacuum pump

## Claims

1. A drying method for drying a roll electrode for a negative electrode, comprising:
a first heating step of raising temperature of the electrode to a first temperature;
a maintenance step of maintaining a state of the electrode for a predetermined period of time after the first heating step; and
a second heating step of raising temperature of the electrode up to a second temperature that is higher than the first temperature after a predetermined period of time has elapsed;
wherein the first temperature is set to evaporation temperature of moisture contained in the electrode or higher, and
wherein the second temperature is set to decomposition temperature of an additive contained in the electrode or higher.

2. The drying method according to claim 1, wherein
the electrode is arranged inside a chamber, and
the maintenance step is performed in a state in which inside the chamber is a vacuum.

3. The drying method according to claim 1 or 2, wherein
the electrode is arranged inside a chamber, and
the second heating step is performed in a state in which inert gas is enclosed inside the chamber.

4. The drying method according to any one of claims 1 to 3, wherein
the second temperature is set lower than decomposition temperature of binding material of the electrode.

5. The drying method according to any one of claims 1 to 4, wherein
the electrode is arranged inside the chamber, and
the first heating step is performed in a state in which inter gas is enclosed inside the chamber.

6. The drying method according to any one of claims 1 to 5, wherein
the first temperature is set lower than temperature where a foil forming a current collector of the electrode becomes a burnt state.

7. The drying method according to any one of claims 1 to 6, further comprising:
a first cooling step of lowering temperature of the electrode to a third temperature that is lower than the second temperature in a state in which inert gas is enclosed inside a chamber after performing the second heating step, wherein
the electrode is arranged inside the chamber, and
the third temperature is lower than the temperature the foil that forms a current collector of the electrode becomes a burnt state.

8. The drying method according to claim 7, further comprising:
a second cooling step of cooling an electrode while evacuating the chamber after the first cooling step.

9. The drying method according to claim 8, further comprising:
a third cooling step of cooling the electrode in a state inert gas is enclosed inside the chamber after the second cooling step.

10. The drying method according to any one of claims 1 to 6, wherein
temperature of the electrode is made lower than the second temperature after the second heating step while evacuating inside the chamber, and
the electrode is arranged inside the chamber.
